# EUROPÄISCHE PATENTSCHRIFT

(11) **EP 3 766 319 B1**
(45) Veröffentlichungstag und Bekanntmachung des Hinweises auf die Patenterteilung: **10.11.2021**
(21) Anmeldenummer: 19187255.5
(22) Anmeldetag: 19.07.2019
(51) Int. Cl.: A01B 15/20, A01B 63/02, A01B 69/00

(54) **LANDWIRTSCHAFTLICHES ARBEITSGERÄT ZUM BEARBEITEN EINES BODENS**
AGRICULTURAL TOOL FOR WORKING SOIL
APPAREIL DE TRAVAIL AGRICOLE DESTINÉ AU TRAITEMENT DU SOL

(43) Veröffentlichungstag der Anmeldung: 20.01.2021
(73) Patentinhaber: Einböck Beteiligungs-GmbH, 4751 Dorf an der Pram (AT)
(72) Erfinder: EINBÖCK, Leopold, 4751 Dorf an der Pram (AT)
(74) Vertreter: Weickmann & Weickmann PartmbB

(56) Entgegenhaltungen:
- EP-A1- 3 232 760
- CN-A- 106 416 461
- US-A- 4 835 691
- US-A- 4 930 581
- US-A1- 2007 088 482

## Beschreibung

### I. Anwendungsgebiet

Die vorliegende Erfindung betrifft ein landwirtschaftliches Arbeitsgerät mit mehreren Arbeitswerkzeugen zum Bearbeiten eines Bodens, die mit Hilfe eines Zugfahrzeuges möglichst linientreu zwischen mehreren Reihen von Feldpflanzen hindurchzuführen sind. Beispiele für die vorgenannten Arbeitswerkzeuge sind Hackwerkzeuge, Scharenwerkzeuge oder Sternradwerkzeuge.

### II. Technischer Hintergrund

Es ist bekannt, dass landwirtschaftliche Feldpflanzen in Reihen auf dem Feld angepflanzt werden. Der Boden in den Zwischenräumen zwischen den Reihen der Feldpflanzen bedarf der regelmäßigen landwirtschaftlichen Pflege, beispielsweise durch Auflockern und/oder Entfernen von Unkraut mittels geeigneter Arbeitswerkzeuge. Zu diesem Zweck werden die an einem landwirtschaftlichen Arbeitsgerät angebrachten Arbeitswerkzeuge, beispielsweise Hackwerkzeuge, mit Hilfe eines Zugfahrzeuges zwischen den Reihen von Feldpflanzen hindurchgezogen. Bleibt dabei der seitliche Abstand der Arbeitswerkzeuge von den Reihen der Feldpflanzen im Wesentlichen konstant, so erfolgt eine linientreue Bearbeitung des Bodens.

Der Boden der zu bewirtschaftenden Felder liegt nicht immer in einer horizontalen Ebene. Es sind auch schräg liegende Böden in Hanglagen zu bearbeiten. Zieht ein Zugfahrzeug ein landwirtschaftliches Arbeitsgerät der in Rede stehenden Art auf einem Feld mit Hanglage über den Boden, so kommt es häufig vor, dass das Arbeitsgerät samt der Arbeitswerkzeuge auf Grund der Wirkung der Hangabtriebskraft aus der linientreuen Bewegung zwischen den Reihen der Feldpflanzen abdriftet. Dabei können die Arbeitswerkzeuge direkt in die Reihen der Feldpflanzen gelangen und diese in unerwünschter Weise beschädigen oder ausreißen.

Die Gefahr des Herauslaufens der Arbeitswerkzeuge aus einer linientreuen Führung zwischen den Reihen der Feldpflanzen besteht auch bei Kurvenfahrten des Zugfahrzeuges. Werden die Kurven zu schnell und/oder zu eng gefahren, so kann ein Abdriften des landwirtschaftlichen Arbeitsgerätes auf Grund der bei Kurvenfahrt wirkenden Zentrifugalkraft auftreten. Erfolgt die Kurvenfahrt auf einem Boden in Hanglage, so tritt das Abdriften des Arbeitsgerätes umso stärker auf, wenn sich die Wirkungen der Hangabtriebskraft einerseits und der Zentrifugalkraft andererseits addieren.

Aus der US 4,835,691 A ist ein landwirtschaftliches Arbeitsgerät gemäß dem Oberbegriff des Anspruchs 1 bekannt. Mit Hilfe des Hydraulikzylinders 14 und der beiden Kolbenstangen 15a, 15b können die Arbeitswerkzeuge quer zu der Fahrtrichtung des Zugfahrzeuges bewegt werden.

In der EP 3 232 760 A1 wird ein landwirtschaftliches Arbeitsgerät beschrieben, bei welchem eine Giereinrichtung zum Drehen des Arbeitsgerätes um eine Hochachse zwischen dem Zugfahrzeug und dem Arbeitsgerät angeordnet ist.

Aus der US 2007/0088482 A1 ist ein landwirtschaftliches Arbeitsgerät bekannt, bei welchem die Arbeitswerkzeuge quer zu der Fahrtrichtung des Zugfahrzeuges bewegt werden können.

In der US 4,930,581 A wird ein landwirtschaftliches Arbeitsgerät beschrieben, bei welchem die Arbeitswerkzeuge mittels einer Giereinrichtung um eine Hochachse gedreht werden können.

Aus der CN 106 416 461 A ist ein handgesteuerter Doppelschwanzradgrubber bekannt, der einen Traktor, einen Hydraulikmechanismus, einen Dreipflugmechanismus sowie einen Spornradmechanismus aufweist.

### III. Darstellung der Erfindung

### a) Technische Aufgabe

Der Erfindung liegt daher die Aufgabe zugrunde, ein landwirtschaftliches Arbeitsgerät zum linientreuen Bearbeiten eines Bodens mittels einer Vielzahl von Arbeitswerkzeugen zu schaffen, welches es ermöglicht, einem Abdriften des Arbeitsgerätes und somit der Arbeitswerkzeuge bei Hangquerfahrten und/oder Kurvenfahrten des Zugfahrzeuges entgegen zu wirken, so dass eine linientreue Bodenbearbeitung beibehalten oder wieder hergestellt werden kann und dadurch die in Reihen angeordneten Feldpflanzen nicht beschädigt oder ausgerissen werden.

### b) Lösung der Aufgabe

Diese Aufgabe wird mittels eines landwirtschaftlichen Arbeitsgerätes mit den Merkmalen des Anspruchs 1 gelöst. Weitere Ausgestaltungen der vorliegenden Erfindung ergeben sich aus den Unteransprüchen.

Erfindungsgemäß wird ein landwirtschaftliches Arbeitsgerät zum Bearbeitern eines Bodens vorgeschlagen, wobei das Arbeitsgerät in üblicher Weise mehrere landwirtschaftliche Arbeitswerkzeuge, beispielsweise Hackwerkzeuge, Scharenwerkzeuge oder Sternradwerkzeuge, trägt, die beim Bearbeiten des Bodens mit Hilfe eines Zugfahrzeuges linientreu zwischen Reihen von Feldpflanzen hindurch zu führen sind, um den Boden in den Zwischenräumen zwischen den Reihen der Feldpflanzen zu bearbeiten. Dabei bewegt sich das Arbeitsgerät in einer Fahrtrichtung.

Es ist eine aktiv antreibbare Giereinrichtung zum Drehen zumindest der Arbeitswerkzeuge oder des gesamten Arbeitsgerätes um eine Hochachse vorhanden, mit deren Hilfe eine Drehung der Arbeitswerkzeuge oder des gesamten Arbeitsgerätes während des Hindurchführens der Arbeitswerkzeuge zwischen den Reihen der Feldpflanzen um die Hochachse bewirkt werden kann. Dabei sind die Arbeitswerkzeuge unabhängig von der Art der Bewegung des Zugfahrzeuges derart aktiv mit der Dreh- bzw. Gierbewegung beaufschlagbar, dass sie im Falle ihres Abdriftens bei Hangquerfahrten und/oder Kurvenfahrten des Zugfahrzeuges in eine linientreue Bodenbearbeitung zurückgeführt werden können. Die Gierbewegung wirkt dem seitlichen Abdriften der Arbeitswerkzeuge aus der linientreuen Bodenbearbeitung dementsprechend entgegen.

Das erfindungsgemäße Arbeitsgerät umfasst einen an das Zugfahrzeug lösbar ankoppelbaren Schieberahmen, mit dessen Hilfe die Arbeitswerkzeuge relativ zu dem Schieberahmen an sich und in einer Schieberichtung quer zu der Fahrtrichtung linear bewegbar sind.

Derartige Schieberahmen sind als solche bereits bekannt und bieten die Möglichkeit, eine linientreue Bodenbearbeitung durch lineare Verschiebung der Arbeitswerkzeuge quer zu der Fahrtrichtung des Zugfahrzeuges einzuhalten.

Für die hier zu lösenden Abdriftprobleme bei Hangquerfahrten und/oder Kurvenfahrten ist ein Schieberahmen allein allerdings nicht ausreichend. Bei Bedarf kann seine Schiebebewegung jedoch mit einer Gierbewegung im Sinne der vorliegenden Erfindung kombiniert werden, so dass die Arbeitswerkzeuge ein Bewegungsprofil aufweisen können, das sich aus einer Überlagerung ihrer linearen Schiebebewegung quer zur Fahrtrichtung und ihrer Dreh- bzw. Gierbewegung um die Hochachse zusammensetzt.

Die Giereinrichtung ist zwischen dem Schieberahmen und den Arbeitswerkzeugen wirkend angeordnet. Sie wirkt sozusagen innerhalb des auch den Schieberahmen umfassenden Arbeitsgerätes, nämlich zwischen dem Schieberahmen und den Arbeitswerkzeugen.

Das Arbeitsgerät setzt sich aus zwei nach ihrer Gier- bzw. Drehbarkeit unterscheidbaren Funktionskomponenten zusammen, nämlich einerseits dem Schieberahmen und andererseits einer Arbeitswerkzeugträgereinheit, die in an sich bekannter Weise neben den Arbeitswerkzeugen diverse Trägergestänge, Federn, Andrucklaufräder sowie Hydraulikzylinder umfasst.

Der Schieberahmen macht die Gierbewegung um die Hochachse nicht mit. Die Giereinrichtung beaufschlagt nur die Arbeitswerkzeugträgereinheit mit der Gierbewegung.

Der Schieberahmen weist auf seiner der Arbeitswerkzeugträgereinheit abgewandten Seite eine herkömmliche Kupplungseinrichtung zum lösbaren Kuppeln des Schieberahmens mit dem Zugfahrzeug auf.

Die Giereinrichtung kann in vorteilhafter Weise in Form von wenigstens zwei Abstandsänderungseinheiten ausgebildet werden, die derart mit Hilfe einer elektronischen Steuerung ansteuerbar sind, dass sie gleichsinnige, unterschiedlich große oder gegensinnige Änderungen des Abstandes zwischen dem Schieberahmen und den Arbeitswerkzeugen bzw. der Arbeitswerkzeugträgereinheit bewirken und dadurch die Gierbewegung verursachen.

Eine alternative Bauweise der Giereinrichtung besteht aus einem Gelenk mit einem Freiheitsgrad um die Hochachse im Sinne der vorliegenden Erfindung, die in diesem Fall von der Gelenkachse gebildet wird.

Das Arbeitsgerät weist in vorteilhafter Weise eine vorzugsweise elektrisch bzw. elektronisch ansteuerbare Antriebseinrichtung zum Antreiben der Giereinrichtung auf, wobei der Antriebseinrichtung ein vorzugsweise elektrisches bzw. elektronisches Steuersignal drahtgebunden oder drahtlos zuführbar ist, auf dessen Grundlage die Steuerung der Gierbewegung erfolgt. Die Antriebseinrichtung kann wenigstens einen Hydraulikzylinder oder wenigstens einen Pneumatikzylinder oder ein mechanisches Kinematikgestänge oder einen Linearantrieb oder einen Spindelantrieb aufweisen. Andersartige Antriebseinrichtungen zum aktiven Antreiben der Giereinrichtung sind grundsätzlich denkbar.

Das Steuersignal, das der Antriebseinrichtung zum Antreiben der Giereinrichtung zugeführt wird, kann auf verschiedene Weisen gewonnen bzw. ermittelt werden. Nachfolgend werden verschiedene Methoden zur Ermittlung des Steuersignals erläutert. Es ist denkbar, nicht nur eine dieser Methoden zur Ermittlung des Steuersignals zu verwenden, sondern bei Bedarf zwei oder mehr verschiedene Methoden zur Ermittlung des Steuersignals zu kombinieren, um im Einzelfall eine möglichst zielgenaue Rückführung der Arbeitswerkzeuge in die linientreue Bodenbearbeitung zu erreichen.

Eine erste Methode zur Ermittlung des Steuersignals besteht darin, an dem Arbeitsgerät wenigstens eine Kamera zum Erfassen eines Ausmaßes einer Abweichung der Arbeitswerkzeuge von der linientreuen Bodenbearbeitung vorzusehen. Dabei nimmt die Kamera die Relativlage der Arbeitswerkzeuge relativ zu den Reihen der Feldpflanzen auf, so dass das Steuersignal auf Grundlage der Information über die Relativlage ermittelbar ist.

Eine zweite Methode zur Ermittlung des Steuersignals besteht darin, es auf Grundlage einer gegebenen Geländeneigung an demjenigen geografischen Ort zu ermitteln, an welchem sich das Arbeitsgerät befindet. Diese Methode ist nur bei Hangquerfahrten relevant, da horizontaler Boden naturgemäß keine Geländeneigung aufweist. Die Information über das Ausmaß der Geländeneigung an dem geografischen Aufenthaltsort des Arbeitsgerätes kann mit Hilfe der Daten eines Navigationsgerätes (z.B. Global Positioning System, GPS) gewonnen werden. Dabei kann das Navigationsgerät entweder an dem Arbeitsgerät selbst oder an dem Zugfahrzeug angeordnet sein.

Eine dritte Methode zur Ermittlung des Steuersignals besteht darin, an dem Arbeitsgerät wenigstens einen Lagesensor zum Erfassen einer räumlichen Lage des Arbeitsgerätes im Raum vorzusehen und das Steuersignal schließlich auf Grundlage dieser räumlichen Lage zu ermitteln. Dabei kann ein Lagesensor zur Anwendung kommen, der wie ein in einem Mobilfunktelefon für dessen Wasserwagenfunktion verwendeter Lagesensor funktioniert.

Eine vierte Methode zur Ermittlung des Steuersignals besteht darin, an dem Arbeitsgerät wenigstens einen Kraftaufnahmesensor zum Erfassen von Andruckkräften der Arbeitswerkzeuge an den zu bearbeitenden Boden vorzusehen und das Steuersignal auf Grundlage einer erfassten Verteilung der Andruckkräfte über die Arbeitswerkzeuge hinweg zu ermitteln.

Eine fünfte Methode zur Ermittlung des Steuersignals besteht darin, an dem Arbeitsgerät wenigstens ein passiv gelenktes Spurrad sowie einen Sensor zum Erfassen eines passiven Lenkwinkels des Spurrades vorzusehen und das Steuersignal auf Grundlage des erfassten Lenkwinkels zu ermitteln. Diese Methode erfordert bei Kurvenfahrten des Arbeitsgerätes eine Information über den Kurvensolllenkwinkel, da eine Gierbewegung im Sinne der vorliegenden Erfindung nur bei einer Abweichung von diesem Kurvensolllenkwinkel erfolgt. Bei einer Hangquerfahrt ohne Kurve beträgt der Solllenkwinkel 0° (keine passive Auslenkung des Spurrades).

Mit dem erfindungsgemäßen Arbeitsgerät ist die Durchführung eines Verfahrens zum linientreuen Hindurchführen von mehreren, an dem Arbeitsgerät befindlichen, landwirtschaftlichen Arbeitswerkzeugen zwischen Reihen von Feldpflanzen möglich, das folgende Schritte umfasst:
- Ermitteln eines Steuersignals, auf dessen Grundlage einem Abdriften der Arbeitswerkzeuge aus einer linientreuen Bodenbearbeitung entgegengewirkt werden kann,
- Ansteuern einer Antriebseinrichtung zum Antreiben einer Giereinrichtung mit dem Steuersignal, um die Arbeitswerkzeuge während des Hindurchführens der Arbeitswerkzeuge zwischen den Reihen der Feldpflanzen um eine Hochachse des Arbeitsgerätes zu drehen und dadurch die Arbeitswerkzeuge mittels einer Gierbewegung in eine linientreue Bodenbearbeitung zurück zu führen.

### c) Ausführungsbeispiel

Nachfolgend wird ein Ausführungsbeispiel eines erfindungsgemäßen Arbeitsgerätes beispielhaft anhand der Zeichnung beschrieben. Es zeigt:

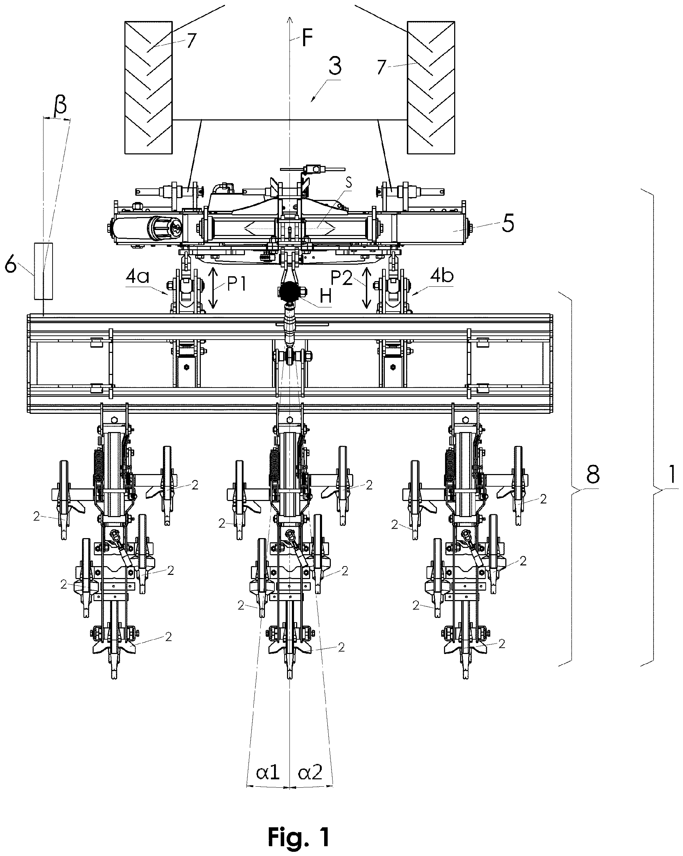

Fig. 1: Eine Ansicht auf ein Ausführungsbeispiel eines erfindungsgemäßen landwirtschaftlichen Arbeitsgerätes und auf ein angedeutetes Zugfahrzeug von oben.

Am oberen Rand der Fig. 1 ist ein Zugfahrzeug 3 mit seinen beiden Hinterrädern 7 angedeutet. Bei dem Zugfahrzeug 3 handelt es sich üblicherweise um einen in der Landwirtschaft herkömmlichen Traktor.

In Fig. 1 ist unterhalb des angedeuteten Zugfahrzeuges 3 ein Ausführungsbeispiel eines landwirtschaftlichen Arbeitsgerätes 1 gemäß der vorliegenden Erfindung gezeigt. Bei dem gezeigten Ausführungsbeispiel setzt sich das Arbeitsgerät 1 aus einem an sich bekannten Schieberahmen 5 und einer Arbeitswerkzeugträgereinheit 8 zusammen. Die Arbeitswerkzeugträgereinheit 8 ist in einer Schieberichtung gemäß dem in Fig. 1 eingezeichneten Doppelpfeil S in Horizontalrichtung verschiebbar, d.h. in Fig. 1 von links nach rechts oder von rechts nach links. Diese lineare Schiebebewegung erfolgt quer zu einer Fahrtrichtung gemäß dem in Fig. 1 eingezeichneten Pfeil F, in welcher das Zugfahrzeug 3 das Arbeitsgerät 1 zieht. Die Schiebebewegung der Arbeitswerkzeugträgereinheit 8 ermöglicht es in bereits bekannter Weise, Arbeitswerkzeuge 2, die hier als Hackwerkzeuge ausgeführt sind, bei Bewegung auf einem im Wesentlichen horizontalen. Ebenen Boden in einer linientreuen Bewegung zwischen Reihen von Feldpflanzen zu halten. Die Schiebebewegung erfolgt mit hydraulischer Unterstützung.

Wie zu erkennen ist, umfasst die Arbeitswerkzeugträgereinheit 8 nicht nur die Arbeitswerkzeuge 2, sondern auch diverse zusätzliche Gestänge, Balken und Hydraulikzylinder, die an sich bekannt sind und in ihrer konkreten Ausgestaltung hier nicht weiter interessieren.

Es sind bei dem gezeigten Ausführungsbeispiel drei Gruppen von jeweils fünf Arbeitswerkzeugen 2 gezeigt. Jede Gruppe umfassend fünf Arbeitswerkzeuge 2 ist für das Hacken des Bodens zwischen zwei benachbarten Reihen von Feldpflanzen vorgesehen. Jede Gruppe von fünf Arbeitswerkzeugen 2 wird mit Hilfe des Zugfahrzeuges 3 in Fahrtrichtung F durch den Zwischenraum zwischen den benachbarten Reihen von Feldpflanzen hindurchgezogen.

Zwischen dem Schieberahmen 5 und der Arbeitswerkzeugträgereinheit 8 sind bei dem gezeigten Ausführungsbeispiel zwei Abstandsänderungseinheiten 4a, 4b angeordnet, die als Giereinrichtung im Sinne der vorliegenden Erfindung fungieren. Die Abstandsänderungseinheit 4a kann den lokalen Abstand zwischen dem Schieberahmen 5 und der Arbeitswerkzeugträgereinheit 8 gemäß Doppelpfeil P1 vergrößern oder verkleinern. Die Abstandsänderungseinheit 4b kann den lokalen Abstand zwischen dem Schieberahmen 5 und der Arbeitswerkzeugträgereinheit 8 gemäß Doppelpfeil P2 vergrößern oder verkleinern. Die Ansteuerung der Abstandsänderungseinheiten 4a, 4b erfolgt jeweils mit Hilfe eines in Fig. 1 nicht zu sehenden Hydraulikzylinders, wobei die beiden Hydraulikzylinder als Antriebseinrichtung im Sinne der vorliegenden Erfindung fungieren.

Die von den Abstandsänderungseinheiten 4a, 4b bewirkten Abstandsänderungen erfolgen vorzugsweise gegensinnig sowie in betragsmäßig gleicher Größe. Beispielsweise verkleinert die Abstandsänderungseinheit 4a den Abstand im Sinne des Doppelpfeils P1 um einen bestimmten Betrag. Gleichzeitig vergrößert die Abstandsänderungseinheit 4b den Abstand im Sinne des Doppelpfeils P2 um denselben Betrag. Diese gegensinnigen Abstandsänderungen führen zu einer Gier- bzw. Drehbewegung der Arbeitswerkzeugträgereinheit 8 um die in Fig. 1 gekennzeichnete Hochachse H, die mittig zwischen den Abstandsänderungseinheiten 4a, 4b liegt und senkrecht zu der Zeichenebene der Fig. 1 verläuft.

Die Drehbewegung der Arbeitswerkzeugträgereinheit 8 erfolgt bei dem vorgenannten Ansteuerungsbeispiel im Gegenuhrzeigersinn um die Hochachse H. Sie ist in Fig. 1 durch den Gierwinkel a2 gekennzeichnet. Selbstverständlich ist bei entgegengesetzter Ansteuerung der Abstandsänderungseinheiten 4a, 4b auch eine Drehbewegung der Arbeitswerkzeugträgereinheit 8 im Uhrzeigersinn um die Hochachse H möglich. Diese Bewegung ist in Fig. 1 durch den Gierwinkel a1 gekennzeichnet.

Grundsätzlich denkbar ist auch, dass die Abstandsänderungseinheiten 4a, 4b gleichsinnige, aber betragsmäßig unterschiedlich große Abstandsänderungen bewirken. Im Einzelfall ergibt sich dadurch eine geringfügige Verschiebung der Lage der Hochachse H in Fig. 1.

Wie in Fig. 1 zu erkennen ist, weisen die Abstandsänderungseinheiten 4a, 4b Kugelgelenklagerungen auf, so dass der entsprechende Freiheitsgrad beim Drehen der Arbeitswerkzeugträgereinheit 8 um die Hochachse H in den Abstandsänderungseinheiten 4a, 4b gewährleistet ist.

Alternativ könnte anstatt der Abstandsänderungseinheiten 4a, 4b an der Stelle der in Fig. 1 gezeigten Hochachse H ein Gelenk angeordnet werden, das den Schieberahmen 5 mit der Arbeitswerkzeugträgereinheit 8 verbindet und die Gierbewegung im Sinne der vorliegenden Erfindung ermöglicht. Die Hochachse H würde dann der Gelenkachse des Gelenks entsprechen und wäre nicht nur eine sich rein geometrisch ergebende Gierachse, wie im Fall der Abstandsänderungseinheiten 4a, 4b, sondern eine in mechanischer Weise konstruktiv ausgebildete Gierachse.

Es sei beispielhaft angenommen, dass das Zugfahrzeug 3 mit dem Arbeitsgerät 1 auf einer Höhenlinie eines Bodens mit Hanglage fährt. Des Weiteren sei angenommen, dass die Fahrt derart erfolgt, dass das Arbeitsgerät 1 in Fig. 1 von rechts nach links abfallend geneigt ist. Bei einer Hangfahrt dieser Art tritt es häufig auf, dass das Arbeitsgerät 1 in Fig. 1 nach links hangabwärts abdriftet. Als Folge davon bewegen sich die Arbeitswerkzeuge 2 in Fig. 1 nach links auf die jeweils links von ihnen befindlichen Reihen der Feldpflanzen (nicht gezeigt) zu. Erreichen sie die Reihen der Feldpflanzen, so werden diese beschädigt oder ausgerissen.

Das Ausmaß der Abweichung der Arbeitswerkzeuge 2 von der linientreuen Bewegung möglichst mittig zwischen den Reihen der Feldpflanzen kann beispielsweise von einer in Fig. 1 nicht gezeigten Kamera erfasst werden und auf Grundlage eines mit Hilfe der Kameradaten elektronisch ermittelten Steuersignals kann die hydraulische Antriebseinrichtung der Abstandsänderungseinheiten 4a, 4b derart angesteuert werden, dass die Arbeitswerkzeugträgereinheit 8 eine Gierbewegung um die Hochachse H im Sinne des Gierwinkels a2 ausführt, d.h. eine Drehbewegung um die Hochachse H im Gegenuhrzeigersinn.

Wie in Fig. 1 zu erkennen ist, ist bei dem gezeigten Ausführungsbeispiel an der Arbeitswerkzeugträgereinheit 8 ein Spurrad 6 angebracht. Das Spurrad 6 ist passiv gelenkt und dreht sich bei einer Kurvenfahrt um einen Lenkwinkel β. Während einer Kurvenfahrt mit linientreuer Bewegung der Arbeitswerkzeuge 2 zwischen den entsprechend der Kurvenkrümmung gekrümmt verlaufenden Reihen von Feldpflanzen weist der Lenkwinkel β einen bestimmten Sollwert auf. Abweichungen des Lenkwinkels β von diesem Sollwert zeigen an, dass die Kurvenfahrt von einer linientreuen Bearbeitung des Bodens durch die Arbeitswerkzeuge 2 abweicht. Die Abweichung des Lenkwinkels β von seinem Sollwert kann als Grundlage zur Ermittlung eines Steuersignals verwendet werden, das der Antriebseinrichtung für die Abstandsänderungseinheiten 4a, 4b zugeführt wird und bewirkt, dass die Abstandsänderungseinheiten 4a, 4b mit einer abgestimmten Gierbewegung der Arbeitswerkzeugträgereinheit 8 um die Hochachse H gegensteuern, um die Hochachse H gegensteuern, um die Arbeitswerkzeuge 2 wieder in eine linientreue Bodenbearbeitung zu führen.

Im Rahmen der vorliegenden Erfindung sind von dem in Fig. 1 gezeigten Ausführungsbeispiel abweichende Ausführungsbeispiele denkbar.

### Bezugszeichenliste

- 1: Arbeitsgerät
- 2: Arbeitswerkzeug
- 3: Zugfahrzeug
- 4a,4b: Abstandsänderungseinheiten
- 5: Schieberahmen
- 6: Spurrad
- 7: Hinterräder des Zugfahrzeugs 3
- 8: Arbeitswerkzeuträgereinheit

- α1: Gierwinkel
- α2: Gierwinkel
- F: Fahrtrichtung
- H: Hochachse
- P1: Abstandsänderung der Abstsandsänderungseinheit 4a
- P2: Abstandsänderung der Abstsandsänderungseinheit 4b
- S: Schieberichtung

## Patentansprüche

1. Landwirtschaftliches Arbeitsgerät (1) zum Bearbeiten eines Bodens, wobei das Arbeitsgerät (1) mehrere landwirtschaftliche Arbeitswerkzeuge (2) aufweist, die beim Bearbeiten des Bodens mit Hilfe eines Zugfahrzeuges (3) linientreu zwischen Reihen von Feldpflanzen hindurch zu führen sind, wobei sich das Arbeitsgerät (1) in einer Fahrtrichtung (F) bewegt, und wobei das Arbeitsgerät (1) einen an das Zugfahrzeug (3) lösbar ankuppelbaren Schieberahmen (5) umfasst, mit dessen Hilfe die Arbeitswerkzeuge (2) quer zu der Fahrtrichtung (F) in einer Schieberichtung (S) bewegbar sind,
**dadurch gekennzeichnet, dass**
es eine aktiv antreibbare Giereinrichtung (4a, 4b) zum Drehen der Arbeitswerkzeuge (2) um eine Hochachse (H) während des Hindurchführens der Arbeitswerkzeuge (2) zwischen den Reihen der Feldpflanzen aufweist, wobei unabhängig von der Art der Bewegung des Zugfahrzeuges (3) die Arbeitswerkzeuge (2) derart aktiv mit einer Gierbewegung beaufschlagbar sind, dass eine linientreue Bodenbearbeitung auch bei Hangquerfahrten und/oder Kurvenfahrten des Zugfahrzeuges (3) durchführbar ist, und wobei die Giereinrichtung (4a, 4b) zwischen dem Schieberahmen (5) und den Arbeitswerkzeugen (2) wirkend angeordnet ist, so dass der Schieberahmen (5) die Gierbewegung nicht mitmacht.

2. Arbeitsgerät (1) nach Anspruch 1,
**dadurch gekennzeichnet, dass**
die Giereinrichtung wenigstens zwei Abstandsänderungseinheiten (4a, 4b) umfasst, die derart ansteuerbar sind, dass sie gleichsinnige und unterschiedlich große oder gegensinnige Änderungen (P1, P2) des Abstandes zwischen dem Schieberahmen (5) und den Arbeitswerkzeugen (2) und dadurch die Gierbewegung bewirken.

3. Arbeitsgerät (1) nach Anspruch 2,
**dadurch gekennzeichnet, dass**
die Abstandsänderungseinheiten (4a, 4b) Kugelgelenklagerungen aufweisen, so dass ein entsprechender Freiheitsgrad bei der Gierbewegung um die Hochachse (H) in den Abstandsänderungseinheiten (4a, 4b) gewährleistet ist.

4. Arbeitsgerät (1) nach Anspruch 1,
**dadurch gekennzeichnet, dass**
die Giereinrichtung ein Gelenk mit einem Freiheitsgrad um die Hochachse aufweist.

5. Arbeitsgerät (1) nach einem der vorangehenden Ansprüche,
**dadurch gekennzeichnet, dass**
es eine Antriebseinrichtung zum Antreiben der Giereinrichtung (4a, 4b) aufweist, wobei der Antriebseinrichtung ein Steuersignal zuführbar ist, auf dessen Grundlage die Steuerung der Gierbewegung erfolgt.

6. Arbeitsgerät (1) nach Anspruch 5,
**dadurch gekennzeichnet, dass**
die Antriebseinrichtung wenigstens einen Hydraulikzylinder oder wenigstens einen Pneumatikzylinder oder ein mechanisches Kinematikgestänge oder einen Linearantrieb oder einen Spindelantrieb aufweist.

7. Arbeitsgerät (1) nach einem der Ansprüche 5 oder 6,
**dadurch gekennzeichnet, dass**
es wenigstens eine Kamera zum Erfassen eines Ausmaßes einer Abweichung der Arbeitswerkzeuge (2) von der linientreuen Bodenbearbeitung aufweist, wobei die Kamera die Relativlage der Arbeitswerkzeuge (2) relativ zu den Reihen von Feldpflanzen aufnimmt und das Steuersignal auf Grundlage der Relativlage ermittelbar ist.

8. Arbeitsgerät (1) nach einem der Ansprüche 5 bis 7,
**dadurch gekennzeichnet, dass**
das Steuersignal auf Grundlage einer Geländeneigung an einem geografischen Ort ermittelbar ist, an welchem sich das Arbeitsgerät (1) befindet.

9. Arbeitsgerät (1) nach Anspruch 8,
**dadurch gekennzeichnet, dass**
es ein Navigationsgerät zur Ermittlung des geografischen Ortes aufweist.

10. Arbeitsgerät (1) nach Anspruch 8,
**dadurch gekennzeichnet, dass**
eine Information über den geografischen Ort von einem Navigationsgerät zur Verfügung stellbar ist, das an dem Zugfahrzeug (3) angeordnet ist.

11. Arbeitsgerät (1) nach einem der Ansprüche 5 bis 10,
**dadurch gekennzeichnet, dass**
es wenigstens einen Lagesensor zum Erfassen einer räumlichen Lage des Arbeitsgerätes (1) im Raum aufweist und das Steuersignal auf Grundlage der räumlichen Lage ermittelbar ist.

12. Arbeitsgerät (1) nach einem der Ansprüche 5 bis 11,
**dadurch gekennzeichnet, dass**
es wenigstens einen Kraftaufnahmesensor zum Erfassen von Andruckkräften der Arbeitswerkzeuge (2) an den Boden aufweist und das Steuersignal auf Grundlage einer erfassten Verteilung der Andruckkräfte über die Arbeitswerkzeuge (2) hinweg ermittelbar ist.

13. Arbeitsgerät (1) nach einem der Ansprüche 5 bis 12,
**dadurch gekennzeichnet, dass**
es wenigstens ein Spurrad (6) sowie einen Sensor zum Erfassen eines Lenkwinkels (β) des Spurrades (6) aufweist und das Steuersignal auf Grundlage des Lenkwinkels (β) ermittelbar ist.

## Claims

1. Agricultural implement (1) for cultivating soil, the implement (1) having a plurality of agricultural working tools (2) which, when cultivating the soil, are to be guided in a precisely linear manner between rows of field crops by means of a towing vehicle (3), the implement (1) moving in a direction of travel (F) and the implement (1) comprising a sliding frame (5) which can be detachably coupled to the towing vehicle (3) and by means of which the working tools (2) can be moved transversely to the direction of travel (F) in a sliding direction (S),
**characterised in that**
the implement has an actively drivable yaw device (4a, 4b) for rotating the working tools (2) about a vertical axis (H) while the working tools (2) are being guided between the rows of field crops, it being possible for the working tools (2) to be actively acted upon by a yaw movement, irrespective of the type of movement of the towing vehicle (3), in such a way that soil cultivation can also be carried out in a precisely linear manner when the towing vehicle (3) travels across slopes and/or turns corners, and the yaw device (4a, 4b) being arranged so as to act between the sliding frame (5) and the working tools (2, such that the sliding frame (5) does not participate in the yaw movement.

2. Implement (1) according to claim 1,
**characterised in that**
the yaw device comprises at least two distance changing units (4a, 4b) which can be controlled in such a way that they cause changes (P1, P2) in the distance between the sliding frame (5) and the working tools (2) in the same direction and of different sizes or in opposite directions, and thus cause the yaw movement.

3. Implement (1) according to claim 2,
**characterised in that**
the distance changing units (4a, 4b) have ball joint bearings, such that a corresponding degree of freedom in the yaw movement about the vertical axis (H) in the distance changing units (4a, 4b) is ensured.

4. Implement (1) according to claim 1,
**characterised in that**
the yaw device has a joint having one degree of freedom about the vertical axis.

5. Implement (1) according to any of the preceding claims,
**characterised in that**
it has a drive device for driving the yaw device (4a, 4b), it being possible for a control signal to be fed to the drive device, on the basis of which the yaw movement is controlled.

6. Implement (1) according to claim 5,
**characterised in that**
the drive device has at least one hydraulic cylinder or at least one pneumatic cylinder or a mechanical kinematic linkage or a linear drive or a spindle drive.

7. Implement (1) according to either claim 5 or claim 6,
**characterised in that**
it has at least one camera for detecting an extent of a deviation of the working tools (2) from the precisely linear soil cultivation, the camera recording the relative position of the working tools (2) relative to the rows of field crops and it being possible for the control signal to be determined on the basis of the relative position.

8. Implement (1) according to any of claims 5 to 7,
**characterised in that**
the control signal can be determined on the basis of a terrain inclination at a geographical location at which the implement (1) is located.

9. Implement (1) according to claim 8,
**characterised in that**
it has a navigation device for determining the geographic location.

10. Implement (1) according to claim 8,
**characterised in that**
information regarding the geographical location can be provided by a navigation device which is arranged on the towing vehicle (3).

11. Implement (1) according to any of claims 5 to 10,
**characterised in that**
it has at least one position sensor for detecting a spatial position of the implement (1) in space, and the control signal can be determined on the basis of the spatial position.

12. Implement (1) according to any of claims 5 to 11,
**characterised in that**
it has at least one force absorption sensor for detecting pressing forces of the working tools (2) on the soil, and the control signal can be determined on the basis of a detected distribution of the pressing forces across the working tools (2).

13. Implement (1) according to any of claims 5 to 12,
**characterised in that**
it has at least one track wheel (6) and a sensor for detecting a steering angle (β) of the track wheel (6), and the control signal can be determined on the basis of the steering angle (β).

## Revendications

1. Appareil de travail agricole (1) pour le traitement d'un sol, dans lequel l'appareil de travail (1) présente plusieurs outils de travail (2) agricoles à faire passer lors du traitement du sol à l'aide d'un véhicule de traction (3) en suivant exactement la ligne entre des rangs de cultures de champ, dans lequel l'appareil de travail (1) se déplace dans un sens de la marche (F), et dans lequel l'appareil de travail (1) comporte un cadre coulissant (5) pouvant être couplé de manière détachable au véhicule de traction (3), cadre à l'aide duquel les outils de travail (2) sont mobiles transversalement au sens de la marche (F) dans un sens de coulissement (S),
**caractérisé en ce que**
il présente un dispositif de lacet (4a, 4b) entraînable de manière active pour la rotation des outils de travail (2) autour d'un axe vertical (H) pendant le passage des outils de travail (2) entre les rangs des cultures de champ, dans lequel indépendamment du type de mouvement du véhicule de traction (3) les outils de travail (2) peuvent être animés de manière active avec un mouvement de lacet de telle manière qu'un traitement du sol suivant exactement la ligne puisse aussi être réalisé lorsque le véhicule de traction (3) se déplace transversalement sur des coteaux et/ou effectue des virages, et dans lequel le dispositif de lacet (4a, 4b) est agencé agissant entre le cadre coulissant (5) et les outils de travail (2) de sorte que le cadre coulissant (5) ne participe pas au mouvement de lacet.

2. Appareil de travail (1) selon la revendication 1,
**caractérisé en ce que**
le dispositif de lacet comporte au moins deux unités de modification de distance (4a, 4b) qui peuvent être commandées de manière à provoquer des modifications de la distance entre le cadre coulissant (5) et les outils de travail (2) qui sont de même sens et de taille différente ou de sens inverse (P1, P2) et qui créent ainsi le mouvement de lacet.

3. Appareil de travail (1) selon la revendication 2,
**caractérisé en ce que**
les unités de modification de distance (4a, 4b) présentent des logements d'articulation sphérique de sorte qu'un degré de liberté correspondant soit garanti lors du mouvement de lacet autour de l'axe vertical (H) dans les unités de modification de distance (4a, 4b).

4. Appareil de travail (1) selon la revendication 1,
**caractérisé en ce que**
le dispositif de lacet présente une articulation avec un degré de liberté autour de l'axe vertical.

5. Appareil de travail (1) selon l'une des revendications précédentes,
**caractérisé en ce que**
il présente un dispositif d'entraînement pour l'entraînement du dispositif de lacet (4a, 4b), un signal de commande pouvant être amené au dispositif d'entraînement, sur la base duquel la commande du mouvement de lacet est effectuée.

6. Appareil de travail (1) selon la revendication 5,
**caractérisé en ce que**
le dispositif d'entraînement présente au moins un vérin hydraulique ou au moins un vérin pneumatique ou une tringle cinématique mécanique ou un entraînement linéaire ou un entraînement par broche.

7. Appareil de travail (1) selon l'une des revendications 5 ou 6,
**caractérisé en ce que**
il présente au moins une caméra pour la détection d'une mesure d'un écart des outils de travail (2) du traitement de sol suivant exactement la ligne, dans lequel la caméra prend la position relative des outils de travail (2) par rapport aux rangs de cultures de champ et le signal de commande peut être calculé sur la base de la position relative.

8. Appareil de travail (1) selon l'une des revendications 5 à 7,
**caractérisé en ce que**
le signal de commande peut être calculé sur la base d'une inclinaison du terrain en un lieu géographique, au niveau duquel l'appareil de travail (1) se trouve.

9. Appareil de travail (1) selon la revendication 8,
**caractérisé en ce que**
il présente un appareil de navigation pour la détermination du lieu géographique.

10. Appareil de travail (1) selon la revendication 8,
**caractérisé en ce que**
une information sur le lieu géographique peut être mise à disposition par un appareil de navigation qui est agencé au niveau du véhicule de traction (3).

11. Appareil de travail (1) selon l'une des revendications 5 à 10,
**caractérisé en ce que**
il présente au moins un capteur de position pour la détection d'une position spatiale de l'appareil de travail (1) dans l'espace et le signal de commande peut être calculé sur la base de la position spatiale.

12. Appareil de travail (1) selon l'une des revendications 5 à 11,
**caractérisé en ce que**
il présente au moins un capteur de force pour la détection de forces de pression des outils de travail (2) contre le sol et le signal de commande peut être calculé sur la base d'une répartition détectée des forces de pression sur les outils de travail (2).

13. Appareil de travail (1) selon l'une des revendications 5 à 12,
**caractérisé en ce que**
il présente au moins une roue à chenille (6) ainsi qu'un capteur pour la détection d'un angle de braquage (β) de la roue à chenille (6) et le signal de commande peut être calculé sur la base de l'angle de braquage (β).
